# EUROPÄISCHE PATENTSCHRIFT

(11) **EP 0 986 847 B1**
(45) Veröffentlichungstag und Bekanntmachung des Hinweises auf die Patenterteilung: **14.05.2003**
(21) Anmeldenummer: 98934809.9
(22) Anmeldetag: 27.05.1998
(51) Int. Cl.: H01S 3/0941

(54) **FESTKÖRPERLASER MIT MINDESTENS EINER PUMPLICHTQUELLE**
SOLID STATE LASER COMPRISING AT LEAST ONE PUMP LIGHT SOURCE
LASER A L'ETAT SOLIDE COMPRENANT AU MOINS UNE SOURCE DE LUMIERE DE POMPAGE

(30) Priorität: 03.06.1997 DE 19723269
(43) Veröffentlichungstag der Anmeldung: 22.03.2000
(73) Patentinhaber: Heidelberger Druckmaschinen Aktiengesellschaft, 69115 Heidelberg (DE)
(72) Erfinder: JÜRGENSEN, Heinrich, D-24223 Raisdorf (DE)
(86) Internationale Anmeldenummer: DE9801448
(87) Internationale Veröffentlichungsnummer: WO98056086

(56) Entgegenhaltungen:
- DE-A- 4 438 368
- US-A- 4 723 257
- US-A- 5 418 880
- US-A- 5 608 742
- KUSHAWAHA V ET AL: "Diode end-pumped high-efficiency Nd:YAG laser" APPLIED PHYSICS B (LASERS AND OPTICS), DEC. 1994, GERMANY, Bd. B59, Nr. 6, Seiten 659-661, XP000495167 ISSN 0946-2171

## Beschreibung

Die Erfindung betrifft einen Festkörperlaser gemäß dem Oberbegriff des Anspruchs 1.

In dem US Patent Nr. 5,127,068 ist eine Anordnung zum Ankoppeln einer Multi-Emitter-Laserdiode an eine Multimode-Lichtleitfaser beschrieben, bei der jeder Emitter über eine Lichtleitfaser das Pumplicht auf den Laserkristall emittiert. Nachteilig ist hierbei, daß infolge des großen Faserbündeldurchmessers nur eine geringe Leuchtdichte auf dem Laserkristall erzielt wird und damit der Wirkungsgrad der Laseranordnung niedrig bleibt. Ein weiterer Nachteil dieser Anordnung ist die aufwendige und komplizierte Ankopplung der einzelnen Lichtwellenleiter an die Emitter. Außerdem ist die Leistungsdichte relativ gering, da sich die Fasern nicht dicht genug packen lassen und jede Faser nur die Leistung eines Emitters aufnehmen kann. Die Leistungsdichte liegt etwa bei
1 KW/cm².

In der EP 0 632 551 A1, Figuren 28 und 29 nebst zugehöriger Beschreibung, ist ein Laserverstärkersystem beschrieben, bei dem ein Laserkristall mittels einer Mehrfachspiegelanordnung über ein Faserbündel gepumpt wird. Neben dem oben beschriebenen Nachteil des Faserbündels ist eine Vielspiegelanordung im Pumpstrahlengang des Lasers erforderlich, die aufwendig und kompliziert zu fertigen ist. Weiterhin ist eine solche Anordnung in der Fertigung schwierig mit ausreichender Sauberkeit herzustellen und im Betrieb vor Verschmutzung zu schützen. Dadurch ergibt sich eine geringe Lebensdauer, insbesondere bei hohen Leistungen.

Die US-A-5 608 742 offenbart darüber hinaus bereits einen Festkörperlaser der eingangs genannten Gattung.

Aufgabe der Erfindung ist es, einfach zu fertigende, kostengünstigere Laseranordnung mit hoher Ausgangsleistung, hohem Wirkungsgrad und langer Lebensdauer herzustellen.

Dies wird durch die im kennzeichnender Teil des Anspruchs 1 aufgezeigten Merkmale erreicht. Vorteilhafte Weiterbildungen der Erfindung sind in den Unteransprüchen 2 bis 10 angegeben. Die Erfindung wird im folgenden anhand der Figuren 1 bis 10 näher erläutert. Es zeigen:
- Fig. 1: eine Schnittdarstellung eines Festkörperlasers, der über eine Lichtleitfaser von einer Pumpquelle aus einem Array von mehreren Laserdioden gepumpt wird,
- Fig. 2a: einen Querschnit durch eine Faser die für das Pumplicht verwendet wird,
- Fig. 2b: einen Querschnitt durch eine andere Ausführungsform einer Faser für das Pumplicht,
- Fig. 3: eine Anordnung zur Erhöhung der Pumpleistung, bei der zwei Pumplichtquellen in eine Einzelfaser eingespeist werden,
- Fig. 4: eine weitere Anordnung zur Erhöhung der Pumpleistung, bei der zwei Pumplichtquellen unterschiedlicher Polarisation zusammengeführt werden,
- Fig. 5: eine Schnittdarstellung einer weiteren Ausführungsform eines Laserre sonators, bei dem zwei Pumplichtquellen das Pumplicht direkt in den Re sonatorraum einkoppeln,
- Fig. 6: eine Ausführungsform einer Abdichtung der Pumplichtquellen, bei der eine Linse die Abdichtung zum Laserresonator übernimmt,
- Fig. 7: eine Ausführungsform eines Laserresonators mit rohrförmigem Gehäuse und einem scheibenförmigen verspiegelten Laserkristall und
- Fig. 8: eine Ausführungsform eines Laserresonators mit rohrförmigem Gehäuse und einem stabförmigen verspiegelten Laserkristall.

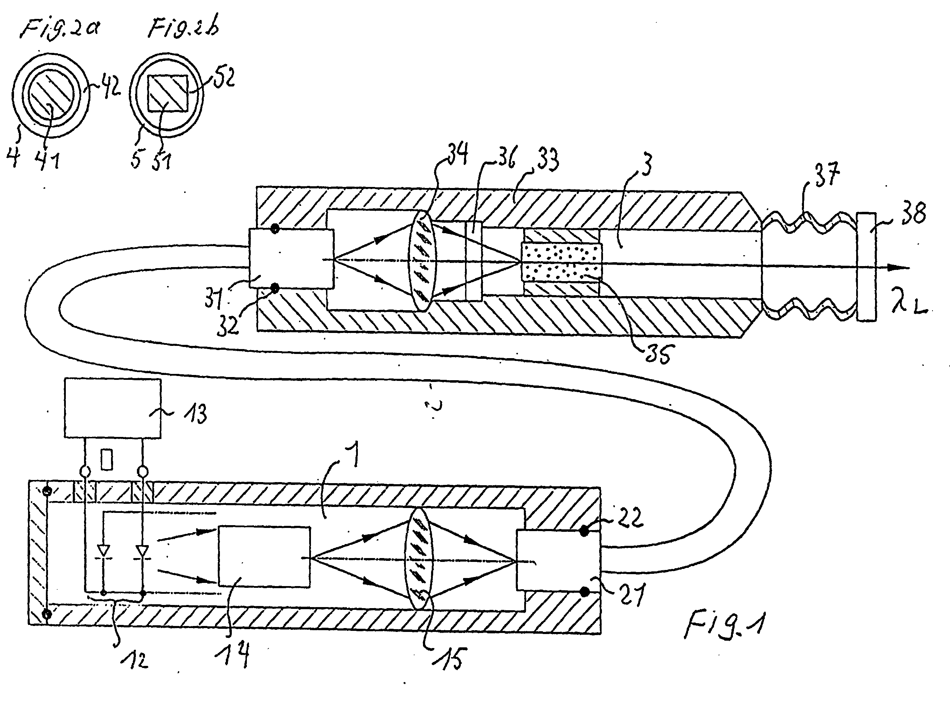

Fig. 1 zeigt ein Ausführungsbeispiel der Erfindung, bei dem eine Laserdiodeneinheit (1), die als Pumplichtquelle dient, einen Lichtwellenleiter (2), der hier als Einzelfaser dargestellt ist, mit einem Laserresonator (3) verbunden ist. Die Laserdiodeneinheit (1) ist in einem hermetisch dichten Gehäuse (11) untergebracht, wobei das eine Ende des Lichtwellenleiters (2) mittels einer lösbaren Steckverbindungen (21) die eine Dichtungen (22) aufweist, an die Lasediodeneinheit (1) angeschlossen ist. Das andere Ende des Lichtwellenleiters (2) ist mit dem Laserresonator (3) ebenfalls über eine lösbare Steckverbindung (31), die eine Dichtung (32) aufweist, verbunden. Das Gehäuse (11) kann in vorteilhafter Weise evakuiert oder mit einem Schutzgas gefüllt sein. Die Laserdiodeneinheit (1) besteht aus einem Laserdiodenarray (12), das von einem Netzteil (13) gespeist wird. Das aus den Laserdioden austretende Licht wird mittels einer Treppenspiegelanordnung (14) und einer Optik (15) in den Lichtwellenleiter (2) eingekoppelt. Eine solche Treppenspiegelanordnung ist beispielsweise in der DE 44 38 368 beschrieben und hat unter anderem den Vorteil, daß sie besonders kostengünstig hergestellt werden kann und nur, wie sich gezeigt hat, geringen Justierlaufwand verlangt. Der Lichtwellenleiter (2) ist zum effizienten Einkoppeln der Laserdiodenenergie als Einzelfaser mit kleinem Durchmesser ausgebildet.

Der Laserresonator besteht vorzugsweise aus einem rohrförmigen Gehäuse (33), an dessen einem Ende der Lichtwellenleiter (2) angeschlossen ist. Das Licht des Lichtwellenleiters (2) wird über eine Optik (34) auf einen Laserkristall (35) gelenkt, wobei sich zwischen der Optik (34) und dem Laserkristall (35) ein erster Laserspiegel (36) befindet. Am anderen Ende des Gehäuses (33) ein gewelltes Rohr (37) aufgesetzt an dessen Ende ein zweiter justierbarer Spiegel (38) angebracht ist. Der Spiegel kann aufgelötet oder geklebt sein. Das Rohr ist gewellt, damit der Spiegel (38) justiert werden kann. Die beiden Spiegel (36) und (38) bilden den Laserresonator, der durch Justierung des Spiegels (38) auf die Resonanzfrequenz, des aus dem Laserkristall (35) austretenden Laserlichts abgestimmt wird. Der Spiegel (36) weist auf seiner, der Optik (34) zugewandten Seite eine Beschichtung auf, die das Licht der Wellenlänge λl des Laserlichts reflektiert und für die Wellenlänge des Pumplichts λp durchlässig ist. Die andere Seite des Spiegels (36) ist so beschichtet, daß sowohl das Pumplicht, als auch das Laserlicht durchgelassen wird. Der Spiegel (38) ist so ausgebildet, daß er eine Teilreflexion des Laserlichts, das aus ihm austritt, gestattet.

In den Figuren 2a und 2b sind mögliche Ausführungsformen der Lichtleitfasern dargestellt, die als Lichtwellenleiter (2) verwendet werden können. In Fig. 2a ist eine Faser (4) mit einem runden Kern (41), einem Mantel (42) und einer Schutzhülle (43) dargestellt und in Fig 2b eine Faser (5) mit einem rechteckigen Kern (51), einem Mantel (5329 und einer Schutzhülle (53). Der Vorteil des rechteckigen Querschnitts liegt darin, daß der Querschnitt optimal an die Einzelemitter angepaßt werden kann Der rechteckige Kern kann vorzugsweise 300 bis 330 µm X 100 bis 170 µm Kantenlänge haben. Bei rundem Kern kann der Durchmesser sich ebenfalls in dem Bereich von 100 bis 330 µm liegen. Mit einer Anordnung, wie sie in den Fig 1, 2a und 2b gezeigt ist, kann eine Diodenleistung von ca. 20 W in den Laserkristall (35) eingekoppelt werden.

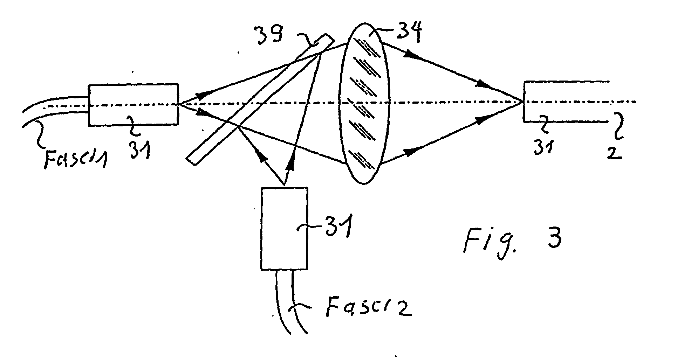

Eine weitere Ausführungsform zur Erhöhung der Pumpleistung ist in Fig. 3 dargestellt. Hier sollen zwei Pumplichtquellen in eine Einzelfaser eingekoppelt werden. Hierzu ist eine Anordnung zum Zusammenführen der beiden Pumplichtquellen wie in Fig. dargestellt, gewählt worden, aber mit dem Unterschied, daß das aus der Koppeloptik austretende Licht nicht direkt auf den Laserkristall (35), sondern in einen einzelnen Lichtwellenleiter, der als Lichtleitfaser ausgebildet ist, eingekoppelt und dann zu Laserresonator weitergeleitet wird.

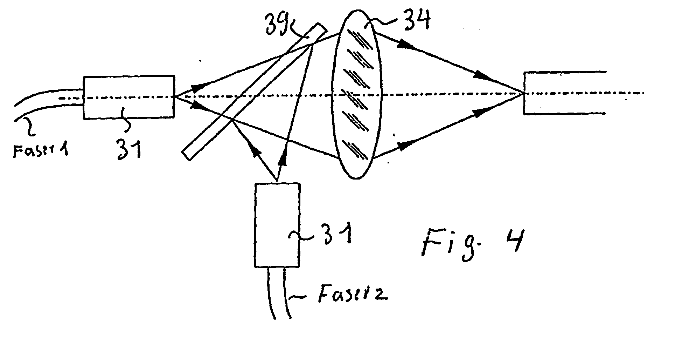

In Fig. 4 ist eine weitere Anordnung zur Erhöhung der Pumpleistung dargestellt, bei der zwei Pumplichtquellen über polarisationserhaltende Lichtleitfasern und eine mit der Fig 3 vergleichbaren Anordnung zusammengeführt werden. Das aus der Faser 1 austretende Licht möge senkrecht polarisiert und das aus der Faser 2 austretende Licht waagerecht polarisiert sein. Der Spiegel 39' soll für die senkrechte Polarisation durchlässig und für die waagerechte Polarisation reflektierend sein. Über die Koppeloptik (34) wird dann das Licht der beiden Lichtquellen entweder wie in Fig 3 über den Spiegel (36) auf den Laserkristall (35) oder wie in Fig. 4 dargestellt, in einen Einzelwellenleiter geleitet.

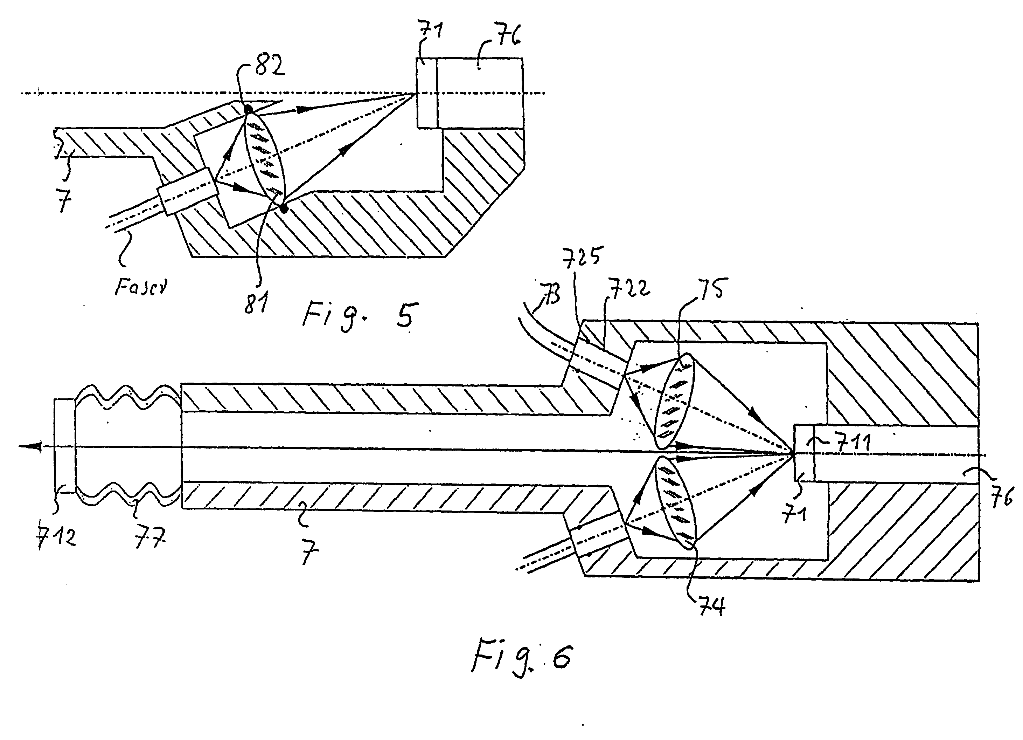

Fig. 5 zeigt eine weitere Ausführungsform eines Laserresonators mit einem rohrförmigen Gehäuse (7), bei dem der Resonatorraum hermetisch abgedichtet ist, Ein verspiegelter Laserkristall (71), der als Scheibe (Disk) ausgebildet ist, wird mittels zweier Pumplichtquellen (72) und (73), deren Steckverbindungen (721) und (723) mittels Dichtringe (724) und (725) mit dem Gehäuse (7) abgedichtet sind, angeregt wird. Das Pumplicht wird über die beiden Optiken (74) und (75) auf den Laserkristall (71) gelenkt. Die Beschichtung des Laserkristalls (71), d.h. der erste Laserspiegel (711) ist so beschaffen, daß sie für die Wellenlänge des Pumplichts λp reflektierend und für die Wellenlänge des Laserlichts λL durchlässig ist. In axialer Richtung ist hinter dem Laserkristall ein Kühlkörper (76) vorgesehen um die Verlustleistung abzuführen. Der zweite Laserspiegel (712) befindet sich am anderen Ende des Resonatorraums und ist über einen gewellten Metallbalgen (77) justierbar.

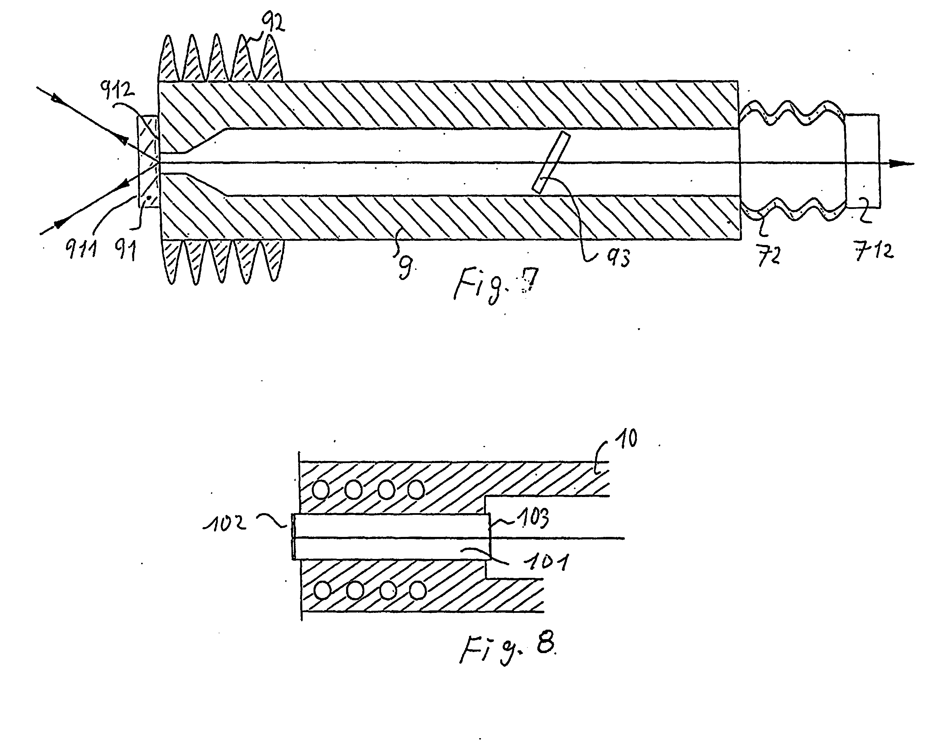

In Fig. 6 ist eine Anordnung (8) zur Abdichtung einer eine Pumplichtquelle gezeigt, bei der die Abdichtung mittels einer Linse (81) und einer Ringdichtung (82) vorgenommen wird. Die beiden Pumplichtquellen der Fig. 7 könnten beispielsweise auf diese Weise abgedichtet sein.

In Fig. 7 ist eine weitere Ausführungsform eines Laserresonators mit rohrförmigem Gehäuse (9) gezeigt, bei dem ebenfalls ein scheibenförmiger verspiegelter Laserkristall (91) verwendet wird. Die Beschaffenheit der Spiegelfläche (911), durch die das Pumplicht eintritt, ist so gewählt, daß sie für die Wellenlänge des Pumplichts λp durchlässig (Transmission) und für die Wellenlänge des Laserlichts λL reflektierend (Reflexion) ist. Die Spiegelfläche (912), auf der Innenseite des Resonators ist so beschaffen, daß sie für die Wellenlänge des Pumplichts λp reflektierend und für die Wellenlänge des Laserlichts λL durchlässig ist. Das rohrförmige Gehäuse (9) kann, wenn der Laser mit Luft gekühlt wird, mit Kühlrippen (92) versehen werden. Optional kann im Strahlengang des Lasers eine Brewsterplatte (93) vorgesehen sein. Das Gehäuse (9) sollte aus gut wärmeleitendem Material, beispielsweise Kupfer hergestellt sein. Der Innenraum des Resonator kann in vorteilhafter Weise mit Schutzgas gefüllt werden.

Fig. 8 zeigt einen Ausschnitt aus einer anderen Ausführungsform eines Laserresonators mit rohrförmigem Gehäuse (10) gezeigt, bei dem ein stabförmiger verspiegelter Laserkristall (101) verwendet wird. Die Beschaffenheit der Spiegelfläche (102), durch die das Pumplicht eintritt, ist so gewählt, daß sie für die Wellenlänge des Pumplichts λp durchlässig (Transmission) und für die Wellenlänge des Laserlichts λL reflektierend (Reflexion) ist. Die Spiegelfläche (103), auf der Innenseite des Resonators ist für die Wellenlänge des Laserlichts λL entspiegelt.

## Patentansprüche

1. Festkörperlaser, bestehend aus mindestens einer Pumplichtquelle (1) mit mehreren Laserdioden (12), und einem optischen Laserresonator (3) mit einem Laserkristall (35), wobei das in den Laserdioden (12) erzeugte Laserlicht in den Laserkristall (35) eingekoppelt wird und wobei zur Erzeugung einer hohen Leuchtdichte des in den Laserkristall (35) eingekoppelten Laserlichts den Laserdioden (12) der Pumplichtquelle (1) eine Mehrspiegelanordnung (14) und eine Optik (15) zur Einkopplung des aus den Laserdioden (12) austretenden Lichtes mit hoher Leuchtdichte in einen einzelnen Lichtwellenleiter (2) nachgeschaltet ist.
**dadurch gekennzeichnet,**
**daß** die Mehrspiegelanordnung (14) als eine an sich bekannte Treppenspiegelanordnung ausgebildet ist, daß mindestens zwei Pumlichtquellen (1) für polarisiertes Laserlicht unterschiedlicher Polarität vorgesehen sind, daß das durch die den Pumplichtquellen (1) zugeordneten Wellenleiter (2) transportierte Laserlicht mit einem polarisationsabhängigen, teildurchlässigen Spiegel (39) zwecks weiterer Erhöhung der Leuchtdichte zusammengefaßt wird, und daß das zusammengefaßte Laserlicht mittels einer Optik (34) in den Laserkristall (35) oder in einen weiteren einzelnen Wellenleiter eingekoppelt wird.

2. Festkörperlaser nach Anspruch 1, **dadurch gekennzeichnet daß** der Laserresonator (3) hermetisch abgedichtet ist.

3. Festkörperlaser nach Anspruch 2, **dadurch gekennzeichnet, daß** der Laserresonator (3) evakuiert ist.

4. Festkörperlaser nach Anspruch 2 **dadurch gekennzeichnet, daß** der Laserresonator (3) mit einem Schutzgas gefüllt ist.

5. Festkörperlaser nach einem der Ansprüche 1 bis 4, **dadurch gekennzeichnet, daß** der Lichtwellenleiter (2) einen runden Querschnitt hat.

6. Festkörperlaser nach einem der Ansprüche 1 bis 4, **dadurch gekennzeichnet, daß** der Lichtwellenleiter (2) einen elliptischen Querschnitt hat.

7. Festkörperlaser nach einem der Ansprüche 1 bis 4, **dadurch gekennzeichnet, daß** der Lichtwellenleiter (2) einen quadratischen Querschnitt hat.

8. Festkörperlaser nach einem der Ansprüche 1 bis 4, **dadurch gekennzeichnet, daß** der Lichtwellenleiter (2) einen rechteckigen Querschnitt hat.

9. Festkörperlaser nach einem der Ansprüche 1 bis 8, **dadurch gekennzeichnet, daß** der Lichtwellenleiter (2) an mindestens einem Ende lösbare Steckverbindungen (31, 32) aufweist.

10. Festkörperlaser nach einem der Ansprüche 1 bis 9, **dadurch gekennzeichnet, daß** der Laserresonator (3) Laserspiegel (36, 38) aufweist und daß mindestens einer der Laserspiegel (36, 38) direkt auf dem Laserkristall (35) angeordnet ist.

## Claims

1. Solid state laser, consisting of at least one pump light source (1) with several laser diodes (12) and an optical laser resonator (3) with a laser crystal (35), wherein the laser light generated in the laser diodes (12) is injected into the laser crystal (35) and wherein to generate a high luminance of the laser light injected into the laser crystal (35) a multiple mirror arrangement (14) and an optic (15) for injecting the light emerging from the laser diodes (12) with high luminance density into a single optical waveguide (2) are connected downstream the laser diodes (12) of the pump light source (1),
**characterised in that** the multiple mirror arrangement (14) is constructed as a stepped mirror arrangement known per se, at least two pump light sources (1) for polarised laser light of varying polarity are provided, the laser light conveyed by the waveguide (2) allocated to the pump light sources (1) is combined with a polarisation-dependent, partially transparent mirror (39) for the purpose of further increasing the luminance density and the combined laser light is injected into the laser crystal (35) or into a further single waveguide by means of an optic (34).

2. Solid state laser according to claim 1, **characterised in that** the laser resonator (3) is hermetically sealed.

3. Solid state laser according to claim 2, **characterised in that** the laser resonator (3) is evacuated.

4. Solid state laser according to claim 2, **characterised in that** the laser resonator (3) is filled with a protective gas.

5. Solid state laser according to one of claims 1 to 4, **characterised in that** the optical waveguide (2) has a round cross-section.

6. Solid state laser according to one of claims 1 to 4, **characterised in that** the optical waveguide (2) has an elliptical cross-section.

7. Solid state laser according to one of claims 1 to 4, **characterised in that** the optical waveguide (2) has a square cross-section.

8. Solid state laser according to one of claims 1 to 4, **characterised in that** the optical waveguide (2) has a rectangular cross-section.

9. Solid state laser according to one of claims 1 to 8, **characterised in that** the optical waveguide (2) has detachable plug-in connections (31, 32) at least at one end.

10. Solid state laser according to one of claims 1 to 9, **characterised in that** the laser resonator (3) has laser mirrors (36, 38) and at least one of the laser mirrors (36, 38) is arranged directly on the laser crystal (35).

## Revendications

1. Laser solide composé d'au moins une source lumineuse de pompage (1) à plusieurs diodes laser (12) et d'un résonateur optique laser (3) avec un cristal de laser (35), dans lequel
la lumière générée par les diodes laser (12) est couplée dans le cristal (35) et, pour créer une forte densité de lumière de la lumière laser injectée dans le cristal (35), on connecte en aval des diodes laser (12) de la source de pompage de lumière (1), un dispositif à plusieurs miroirs (14) ainsi qu'une optique (15) pour coupler la lumière sortant des diodes laser (12) avec une densité d'éclairage élevée pour passer dans un guide de lumière (2) distinct,
**caractérisé en ce que**
le dispositif à plusieurs miroirs (14) est réalisé sous la forme d'un dispositif à miroirs en gradin, connu en soi,
au moins deux sources de pompage de lumière (1) pour de la lumière laser polarisée avec une polarité différente, sont prévues,
la lumière laser transportée par les guides d'ondes (2) associés aux sources de pompage de lumière (1), est regroupée par un miroir semi-transparent (39), dépendant de la polarisation, pour augmenter encore la densité de lumière, et
la lumière laser regroupée est injectée par une optique (34) dans le cristal de laser (35) ou dans un autre guide d'ondes.

2. Laser solide selon la revendication 1,
**caractérisé en ce que**
le résonateur laser (3) est fermé de manière hermétique.

3. Laser solide selon la revendication 1,
**caractérisé en ce que**
le résonateur laser (3) est sous vide.

4. Laser solide selon la revendication 2,
**caractérisé en ce que**
le résonateur laser (3) est rempli d'un gaz protecteur.

5. Laser solide selon les revendications 1 à 4,
**caractérisé en ce que**
le guide de lumière (2) a une section ronde.

6. Laser solide selon les revendications 1 à 4,
**caractérisé en ce que**
le guide de lumière (2) a une section elliptique.

7. Laser solide selon l'une des revendications 1 à 4,
**caractérisé en ce que**
le guide de lumière (2) a une section carrée.

8. Laser solide selon l'une des revendications 1 à 4,
**caractérisé en ce que**
le guide de lumière (2) a une section rectangulaire.

9. Laser solide selon la revendication 8,
**caractérisé en ce que**
le guide de lumière (2) comporte des connexions amovibles (31, 32) à au moins une extrémité.

10. Laser solide selon l'une des revendications 1 à 9,
**caractérisé en ce que**
le résonateur laser (3) comporte des miroirs laser (36, 38) et au moins un cristal laser (35) est prévu directement sur l'un des miroirs laser (36, 38).
